# EUROPEAN PATENT SPECIFICATION

(11) **EP 1 884 379 B1**
(45) Date of publication and mention of the grant of the patent: **09.06.2010**
(21) Application number: 07075617.6
(22) Date of filing: 19.07.2007
(51) Int. Cl.: B60G 9/00, B60G 13/00, F16F 9/54

(54) **Shock absorber mounting**
Stoßdämpfermontage
Montage d'amortisseur

(30) Priority: 03.08.2006 NL 1032271
(43) Date of publication of application: 06.02.2008
(73) Proprietor: Weweler Nederland B.V., 7332 AP Apeldoorn (NL)
(72) Inventor: Everts, Geert, 7722 LL Dalfsen (NL)
(74) Representative: Houben, Christiaan Hein Willem Frans

(56) References cited:
- EP-A- 1 052 123
- EP-A- 1 580 044
- EP-A1- 1 088 687
- EP-A1- 1 188 948
- FR-A- 2 772 307
- FR-A1- 2 775 935

## Description

The invention relates to a wheel axle suspension according to the preamble of claim 1.

A wheel axle suspension of this type is known from EP 1 088 687.

Shock absorbers which are used in a wheel axle suspension of this type comprise a working cylinder which is filled with a hydraulic liquid, and a piston which can move to and fro. The working cylinder is placed in a cylindrical housing. The bottom of the housing is provided with the abovementioned securing eyelet on the outside, by means of which the shock absorber is attached to the shock absorber mounting part. The space between the sleeve and the working cylinder forms a reservoir for hydraulic liquid. A foot valve is provided in the bottom of the working cylinder, which foot valve connects the working cylinder to the reservoir. With shock absorbers, the foot valve is often not arranged in the centre of the bottom, but placed outside of the centre. Thus, the shock absorber can be fitted in a more oblique position than is the case with a centrally arranged foot valve and can be fitted almost horizontally, while the foot valve is always below the liquid level in the reservoir and no air is sucked from the reservoir into the working cylinder when sliding the piston out. In practice, an indication is provided on the shock absorber, for example by means of a sticker, which side has to be at the top during operation. Since the wheel axle suspensions are usually fitted on a chassis upside down, the shock absorbers are often fitted upside down, despite the sticker on the shock absorber, as a result of which the foot valve is above the liquid level in the reservoir in the operating position and air is sucked from the reservoir into the working cylinder.

In the car-manufacturing industry, the co-called poka-yoke principle is used (see for example: Shingo, Shigeo, Zero quality control: source inspection and the poka-yoke system, transl. A.P. Dillion, Portland, Oregon: Productivity Press, 1986) in order to prevent mistakes during a manufacturing or assembly process. According to this principle, components are usually formed in such a way that they can only be mounted in the correct way and human errors during fitting can be completely excluded.

It is an object of the invention to form a wheel axle suspension of the type described in the preamble in such a manner that correct fitting of the shock absorber is ensured.

This object is achieved according to the invention by means of a wheel axle suspension according to the preamble of claim 1, characterized by the fact that the lips of the shock absorber mounting part differ in shape and the shock absorber bottom is formed in a complementary manner to the lips, such that the shock absorber can only be fitted to the shock absorber mounting part in one particular way during fitting.

The shock absorber bottom and the shock absorber mounting part are asymmetrical with respect to an imaginary plane which extends through the centre axis of the shock absorber and substantially at right angles to the centre axis of the wheel axle. Due to this asymmetry with respect to said imaginary plane, it can be ensured that the shock absorber is fitted correctly to the shock absorber mounting part, while the shock absorber can be fitted in various oblique positions and even horizontally as a result of which the same shock absorber in combination with the same associated shock absorber mounting part can be used in different wheel axle constructions.

Preferably, a lug is integrally formed on the shock absorber bottom on one side next to the securing eyelet and extends in the direction of the associated lip and the other lip of the shock absorber mounting part has an integrally formed lug which extends in the direction of the shock absorber bottom. The lug on the shock absorber bottom and the lug on said lip are formed in such a manner that the lug on the shock absorber bottom does not fit on the side of the lip which is provided with a lug in any oblique position.

In a further preferred embodiment, the shock absorber bottom is formed as a moulded piece and fitted to the shock absorber housing by means of welding.

The invention will be explained in more detail with reference to the drawing, in which:
Fig. 1 shows a perspective view of a wheel axle suspension according to the invention,
Fig. 2 shows a top view of the connection between a shock absorber and a shock absorber mounting part of the wheel axle suspension from Fig. 1,
Fig. 3 shows a side view of the connection from Fig. 2,
Fig. 4 shows another side view of the connection from Fig. 2, and
Fig. 5 shows a partial longitudinal section through a shock absorber for a wheel axle suspension from Fig. 1.

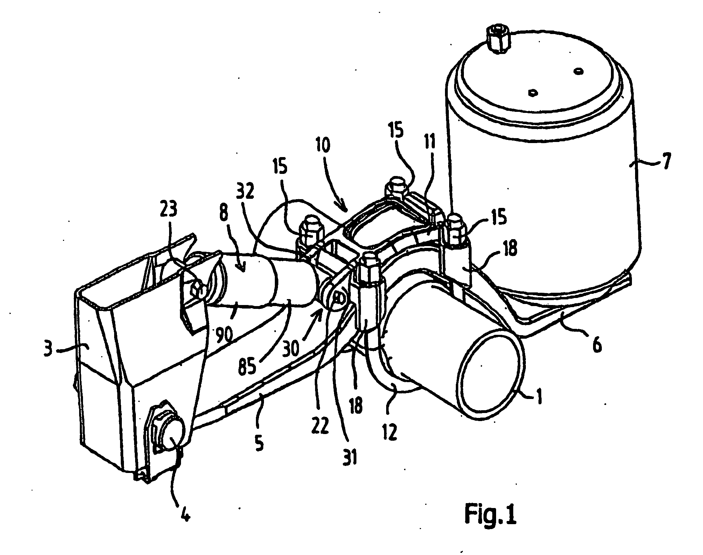

Fig. 1 shows one half of a wheel axle suspension for a vehicle, such as a trailer. The two halves of a suspension of this type are situated on either side of the vehicle and comprise a suspension arm 5 extending in the longitudinal direction of the vehicle. The suspension arm 5 is in this case represented as a bent suspension arm, but could also be a substantially straight suspension arm. The suspension arm 5 is preferably a parabolic spring arm formed by rolling, which is subsequently, if desired, bent into the correct shape.

An axle body 1 of the wheel axle of the vehicle is connected to the suspension arm 5 by means of connecting means 10. The connecting means 10 comprise a supporting plate 11 (strap plate) which is provided on the suspension arm 5 on that side of the suspension arm 5 which is remote from the axle body 1. The connecting means 10 furthermore comprise clamping means formed as U-shaped bolts 12 (straps) which grip around the axle body 1 into projecting parts 18 of the supporting plate 11 through bores intended for this purpose. By screwing nuts 12 onto the ends of the U-shaped bolts and tightening them, the supporting plate 11, the suspension arm 5 and the axle body 1 are clamped together and fixedly connected to one another.

The suspension arm 5 is hingedly connected to a supporting bracket 3 which is arranged on the underside of the chassis (not shown) of the vehicle at the front side, viewed in the direction of travel, by means of a hinge bolt 4.

A pneumatic spring 7 is arranged between the rear side 6 of the suspension spring 5 and the chassis (not shown).

A hydraulic shock absorber 8 is fitted between the supporting plate 11 and the bearing bracket 3 in front of the axle 1, viewed in the direction of travel. The shock absorber 8 is attached on its end directed to the supporting plate 11 to a shock absorber mounting part 30 by means of a securing bolt 22. On the other side, the shock absorber 8 is attached to the bearing bracket 3 by means of a securing bolt 23. The shock absorber 8 could also be attached to another part or directly to the chassis (not shown) instead of to the bearing bracket 3.

The shock absorber mounting part 30 can be integrally formed on the supporting plate 11, as is illustrated in Fig. 1, but can also be a separate part which is coupled to the supporting plate in a manner which is known from, for example, NL 1025811.

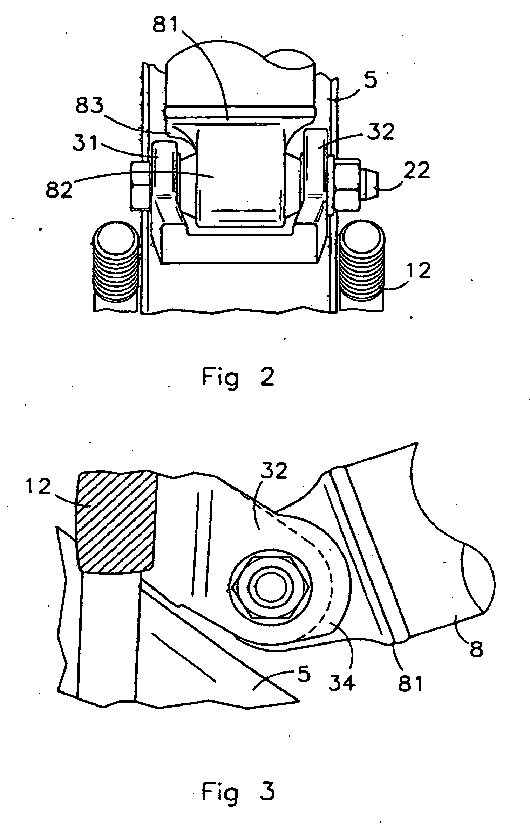

The shock absorber mounting part 30 comprises two lips 31 and 32 which are spaced apart and are each provided with a bore. The bores in the lips 31 and 32 have a common centre axis. As is also illustrated in Figs 2-5, the shock absorber 8 has a bottom 81 having a securing eyelet 82. In the fitted state, the securing eyelet 82 is situated between the lips 31 and 32 of the shock absorber mounting part 30 and the securing bolt 22 is inserted into the bores and the securing eyelet 82.

The lips 31, 32 differ in shape. In essence, the contour of the one lip 31 is slightly smaller than that of the other lip 32, because a lug 34 is integrally formed on the latter, the imaginary partition between the lug 34 and the rest of the lip 32 being illustrated by means of a dashed line in Fig. 3. A lug 83 is integrally formed on the shock absorber bottom 81 on one side of the securing eyelet 82 and extends in the direction of the associated smaller lip 31. The lug 83 on the shock absorber bottom 81 and the lug 34 on said lip 32 are formed in such a manner that the lug 83 on the shock absorber bottom 81 will never fit on the side of the lip 32 provided with the lug 34. In other words, the shock absorber bottom 81 is thus formed in a complementary manner to the lips 31, 32 such that the shock absorber 8 can only be attached to the shock absorber mounting part 30 in one particular way, that is to say the correct way, during fitting. The assembly comprising a shock absorber and a shock absorber mounting part and formed in this way can be used in a great variety of different wheel axle suspensions, since the lips and lugs which have been positioned and formed in such a manner make it possible to fit the shock absorber within a large angle range, that is to say from horizontal to very oblique.

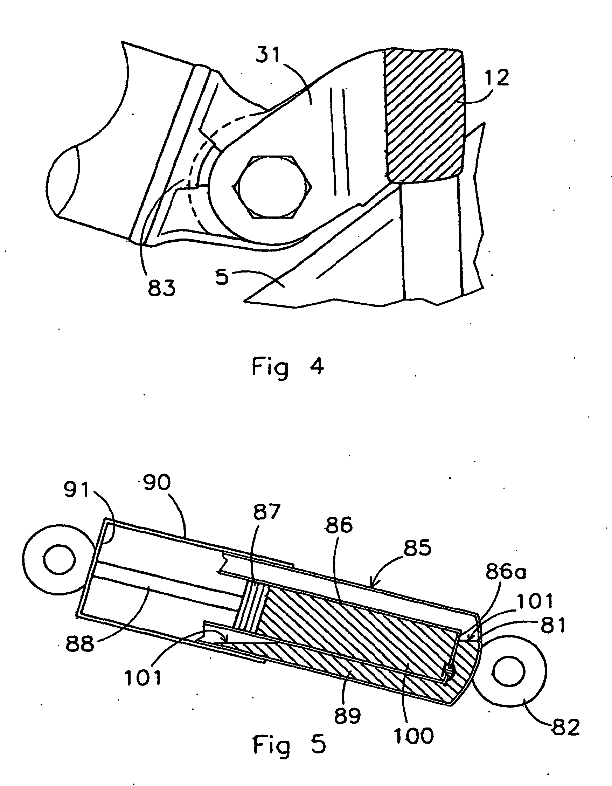

The fact that the shock absorber 8 can no longer be fitted incorrectly, that is to say upside down, is particularly relevant if use is made of so-called asymmetrical absorbers, as illustrated in Fig. 5 in cross section. Such a shock absorber 8 comprises a cylindrical housing 85 having a bottom 81 which has been referred to above as shock absorber bottom 81. In the housing 85, a working cylinder 86 is provided which is filled with hydraulic liquid 100 and inside of which a piston 87 with a piston rod 88 can be moved to and fro. By means of the end which is remote from the piston 87, the piston rod 88 is connected to the bottom 91 of a sleeve 90 which is partly arranged around the housing 85 and which can be moved with respect to the latter in a telescopic manner when the absorber 8 contracts or expands. A space 89 is provided between the inside of the housing 85 and the outside of the cylinder 86, which space 89 serves as a reservoir for hydraulic liquid.

The working cylinder 86 has a bottom 86a in which a so-called foot valve 88 is arranged, which foot valve 88 connects the working cylinder 86 to the reservoir 89. Said foot valve 88 is fitted in an eccentric position with respect to the centre axis of the cylinder 85. In the fitted state, the foot valve 88 is on the bottom side, as illustrated in Fig. 5, that is to say below the centre axis of the cylinder 86 viewed in the direction of gravity, as a result of which the shock absorber 8 can be fitted in an almost horizontal position while the foot valve 88 is still below the level of the hydraulic liquid 100 in the reservoir 89, which level is indicated by reference numeral 101. As a result of the foot valve 88 always being below the liquid level 101 when the absorber 8 expands, it is ensured that no air can be sucked into the working cylinder 86, which would be very disadvantageous with regard to the operation of the shock absorber 8.

It will be clear that if such an asymmetric absorber 8 is fitted the wrong way round, that is to say with the foot valve 88 above the centre axis, only air will be sucked into the working cylinder 86 from the reservoir 89 when the absorber 8 expands, while hydraulic liquid is pushed to the reservoir 89 when the absorber 8 contracts. With an incorrectly fitted shock absorber 8 of this type, the damping action will therefore also almost immediately be lost. It is therefore important to fit this type of shock absorber in the correct manner, which can be ensured by means of the measures according to the invention.

In a preferred embodiment, the shock absorber bottom 81 is formed as one moulded piece with the securing eyelet 82 and the lug 83. Subsequently, the shock absorber bottom 81 is welded to the shock absorber housing 85.

## Claims

1. Wheel axle suspension for a vehicle comprising a suspension arm (5) which extends on both sides of the vehicle in the longitudinal direction of the vehicle and to which the axle body (1) of the wheel axle of the vehicle is attached by means of connecting means comprising a supporting plate (11) which is provided on the suspension arm on the side of the suspension arm which is remote from the axle body and clamping means (12) which fixedly connect the supporting plate, the suspension arm and the axle body to one another,
in which a hydraulic shock absorber (8) is fitted between the supporting plate and a structural part (3) of the vehicle which is situated in front of the axle, viewed in the direction of travel, which hydraulic shock absorber, on its end directed to the supporting plate, is attached to a shock absorber mounting part (30), which shock absorber mounting part comprises two lips (31, 32) which are spaced apart, each of which is provided with a bore, which bores have a common centre axis, and in which the shock absorber comprises a bottom (81) having a securing eyelet (82), which eyelet is situated between the lips in its mounted state,
**characterized in that** the lips of the shock absorber mounting part differ in shape and the shock absorber bottom is formed in a complementary manner to the lips, such that the shock absorber can only be fitted to the shock absorber mounting part in one particular way during fitting,

2. Wheel axle suspension according to claim 1, in which a lug is integrally formed on the shock absorber bottom on one side next to the securing eyelet and extends in the direction of the associated lip and in which the other lip of the shock absorber mounting part has an integrally formed lug which extends in the direction of the shock absorber bottom.

3. Wheel axle suspension according to claim 1 or 2, in which the shock absorber bottom is formed as a moulded piece and fitted to the shock absorber housing by means of welding

4. Wheel axle suspension according to one of the preceding claims, in which the shock absorber mounting part is integrally formed on the supporting plate.

5. Wheel axle suspension according to one of the preceding claims, in which the shock absorber mounting part is a separate part which can be connected to the supporting plate.

6. Assembly comprising a shock absorber and a shock absorber mounting part as defined in one of the preceding claims.

## Patentansprüche

1. Radachsenaufhängung für ein Fahrzeug, die einen Lenker (5) aufweist, der sich an beiden Seiten des Fahrzeugs in der Längsrichtung des Fahrzeugs erstreckt und an dem der Achsenkörper (1) der Radachse des Fahrzeugs durch eine Verbindungseinrichtung angebracht ist, die aufweist: eine Stützplatte (11), die an dem Lenker an derjenigen Seite des Lenkers vorgesehen ist, die von dem Achsenkörper entfernt ist, und Spannmittel (12), welche die Stützplatte, den Lenker und den Achsenkörper fest miteinander verbinden,
wobei ein hydraulischer Stoßdämpfer (8) zwischen der Stützplatte und einem Bauteil (3) des Fahrzeugs, das sich, in der Fahrtrichtung gesehen, vor der Achse befindet, eingesetzt ist, wobei der hydraulische Stoßdämpfer an einem Stoßdämpfer-Montageteil (30) an der Seite der Stützplatte angebracht ist, wobei das Stoßdämpfer-Montageteil zwei Lippen (31, 32) aufweist, die voneinander beabstandet sind und die jeweils mit einer Bohrung versehen sind, wobei die Bohrungen eine gemeinsame Mittelachse haben, und wobei der Stoßdämpfer einen Boden (81) aufweist, der eine Befestigungsöse (82) hat, wobei sich die Öse in ihrem montierten Zustand zwischen den Lippen befindet,
**dadurch gekennzeichnet, dass** die Lippen des Stoßdämpfer-Montageteils sich hinsichtlich ihrer Gestalt unterscheiden und der Boden des Stoßdämpfers komplementär zu den Lippen gebildet ist, so dass der Stoßdämpfer während des Einbaus nur auf eine bestimmte Weise an dem Stoßdämpfer-Montageteil angebracht werden kann.

2. Radachsenaufhängung nach Anspruch 1, wobei ein Ansatz an dem Boden des Stoßdämpfers an einer Seite neben der Befestigungsöse integral ausgebildet ist und sich in Richtung der zugehörigen Lippe erstreckt und wobei die andere Lippe des Stoßdämpfer-Montageteils einen integral ausgebildeten Ansatz hat, der sich in Richtung des Bodens des Stoßdämpfers erstreckt.

3. Radachsenaufhängung nach Anspruch 1 oder 2, wobei der Boden des Stoßdämpfers als ein Formteil ausgebildet und durch Schweißen an dem Stoßdämpfergehäuse angebracht ist.

4. Radachsenaufhängung nach einem der vorhergehenden Ansprüche, wobei das Stoßdämpfer-Montageteil an der Stützplatte integral ausgebildet ist.

5. Radachsenaufhängung nach einem der vorhergehenden Ansprüche, wobei das Stoßdämpfer-Montageteil ein separates Teil ist, das mit der Stützplatte verbunden werden kann.

6. Anordnung, die einen Stoßdämpfer und ein Stoßdämpfer-Montageteil nach einem der vorhergehenden Ansprüche aufweist.

## Revendications

1. Suspension d'essieu de roue pour un véhicule comprenant un bras de suspension (5) qui s'étend des deux côtés du véhicule dans la direction longitudinale du véhicule et auquel le corps d'essieu (1) de l'essieu de roue du véhicule est fixé au moyen de moyens de raccordement comprenant une plaque de support (11) qui est prévue sur le bras de support du côté du bras de suspension qui est à distance du corps d'essieu et des moyens de serrage (12) qui raccordent de manière fixe la plaque de support, le bras de suspension et le corps d'essieu les uns aux autres,
dans laquelle un amortisseur hydraulique (8) est monté entre la plaque de support et une partie structurelle (3) du véhicule qui est située devant l'essieu, lorsque l'on observe dans la direction de déplacement, lequel amortisseur hydraulique est fixé sur une partie de montage d'amortisseur (30) du côté de la plaque de support, laquelle partie de montage d'amortisseur comprend deux lèvres (31, 32) qui sont espacées, dont chacune est dotée d'un alésage, lesquels alésages ont un axe central commun et dans laquelle l'amortisseur comprend une partie inférieure (81) ayant un oeillet de fixation (82), lequel oeillet est situé entre les lèvres dans son état monté,
**caractérisée en ce que** les lèvres de la partie de montage d'amortisseur diffèrent du point de vue de la forme et la partie inférieure de l'amortisseur est formée d'une manière complémentaire par rapport aux lèvres, de sorte que l'amortisseur ne peut être monté sur la partie de montage d'amortisseur que d'une manière particulière, lors de la mise en place.

2. Suspension d'essieu de roue selon la revendication 1, dans laquelle une patte est formée de manière solidaire sur la partie inférieure de l'amortisseur d'un côté à proximité de l'oeillet de fixation et s'étend dans la direction de la lèvre associée et dans laquelle l'autre lèvre de la partie de montage d'amortisseur a une patte formée de manière solidaire qui s'étend dans la direction de la partie inférieure de l'amortisseur.

3. Suspension d'essieu de roue selon la revendication 1 ou 2, dans laquelle la partie inférieure de l'amortisseur est formée comme une pièce moulée et montée sur le boîtier d'amortisseur au moyen du soudage.

4. Suspension d'essieu de roue selon l'une quelconque des revendications précédentes, dans laquelle la partie de montage d'amortisseur est formée de manière solidaire sur la plaque de support.

5. Suspension d'essieu de roue selon l'une quelconque des revendications précédentes, dans laquelle la partie de montage d'amortisseur est une pièce séparée qui peut être raccordée à la plaque de support.

6. Ensemble comprenant un amortisseur et une partie de montage d'amortisseur telle que définie dans l'une quelconque des revendications précédentes.
